# EUROPEAN PATENT APPLICATION

(11) **EP 2 924 643 A1**
(43) Date of publication of application: **30.09.2015**
(21) Application number: 15160491.5
(22) Date of filing: 24.03.2015
(51) Int. Cl.: G06Q 30/02

(54) **Prepaid card exchange systems and associated methods**

(30) Priority: 26.03.2014 US 201461970809 P; 23.06.2014 US 201414312393
(71) Applicant: Outerwall Inc., Bellevue, WA 98004 (US)
(72) Inventor: Friedlander, Jason, Highlands Ranch, CO Colorado 80129 (US)
(74) Representative: Grünecker Patent- und Rechtsanwälte PartG mbB

(57) **Abstract**

The present disclosure is directed to gift card exchange kiosks, servers, and other systems, and associated methods of use. Particular portions of the present disclosure are directed to preventing misuse of gift card exchanges by consumers at kiosks. In some embodiments, for example, a first gift card is received from a consumer at a kiosk. A cash voucher is dispensed to the consumer in exchange for the first gift card. An exchange server drains the face value from the first gift card to prevent future use by the consumer and uses the face value to purchase a second gift card. The second gift card can then be sold by the kiosk and/or kiosk operator for value.

## Description

### CROSS-REFERENCE TO APPLICATION(S) INCORPORATED BY REFERENCE

The present application claims priority to and the benefit of U.S. Provisional Patent Application No. 61/970,809, filed March 26, 2014 and titled "PREPAID CARD EXCHANGE SYSTEMS AND ASSOCIATED METHODS," which is incorporated herein in its entirety by reference.

The disclosures of U.S. Patent Application No. 11/294,637, entitled "METHODS AND SYSTEMS FOR EXCHANGING AND/OR TRANSFERRING VARIOUS FORMS OF VALUE," filed December 5, 2005; U.S. Patent Application No. 10/558,907, entitled "METHODS AND SYSTEMS FOR PROVIDING PRODUCTS, SUCH AS DIGITAL CONTENT INCLUDING GAMES, RING TONES, AND/OR GRAPHICS; AND SERVICES, SUCH AS COMPUTER NETWORK SERVICE INCLUDING INTERNET SERVICE," filed February 7, 2007; U.S. Patent No. 8,332,313, entitled "METHODS AND SYSTEMS FOR EXCHANGING AND/OR TRANSFERRING VARIOUS FORMS OF VALUE," filed July 22, 2008; U.S. Patent No. 8,024,272, entitled "METHODS AND SYSTEMS FOR EXCHANGING/TRANSFERRING GIFT CARDS," filed April 12, 2010; U.S. Patent No. 8,229,851, entitled "METHODS AND SYSTEMS FOR EXCHANGING/TRANSFERRING GIFT CARDS," filed August 19, 2011; and U.S. Patent Application No. 13/286,971, entitled "GIFT CARD EXCHANGE KIOSKS AND ASSOCIATED METHODS OF USE," filed November 1, 2011, are incorporated herein by reference in their entireties.

### TECHNICAL FIELD

The present disclosure relates generally to systems, apparatuses, and methods for exchanging gift cards and, more particularly, to consumer-operated kiosks and associated systems, apparatuses, and methods for exchanging gift cards for cash, cash vouchers, other gift cards, etc.

### BACKGROUND

Gift cards and other prepaid cards are restricted monetary equivalents issued by retailers or banks that consumers can use as an alternative to currency for purchasing goods, services, etc. While prepaid cards rank as one of the most popular gifts given by consumers in the United States, $8 billion worth of unused and/or expired gift card value, referred to as "breakage," occurs annually. Various methods have been proposed to reduce breakage. Some websites, for example, provide consumers with the ability to sell unwanted gift cards by auction. Other websites provide consumers with the ability to exchange unwanted gift cards for cash through the mail. Additionally, kiosks exist that allow consumers to exchange gift cards for cash, a cash voucher, or a new gift card.

Current options for exchanging gift cards are susceptible to misuse, such as by "double dipping." For example, an unscrupulous cardholder could write down the identification number associated with a $100 gift card, and then exchange the card for a cash voucher using, e.g., a gift card exchange kiosk. The cardholder could then redeem the $100 card value (e.g., by using the copied identification number to make an online purchase) before the card has been resold or otherwise monetized by the kiosk operator. Accordingly, it would be advantageous to provide a financially secure gift card exchange system that prevents unscrupulous consumers from misappropriating card value.

### BRIEF DESCRIPTION OF THE DRAWINGS

Figure 1 is a partially schematic isometric view of a kiosk configured in accordance with an embodiment of the present disclosure.
Figure 2 illustrates a suitable network environment for implementing various aspects of gift card exchange technology configured in accordance with embodiments of the present disclosure.
Figures 3A and 3B illustrate suitable network environments for implementing various gift card exchange functionalities that are divided among multiple entities in accordance with embodiments of the present disclosure.
Figure 4 is a schematic diagram illustrating aspects of a gift card exchange routine in accordance with embodiments of the present disclosure.
Figure 5 is a flow diagram illustrating a routine for exchanging a gift card in accordance with embodiments of the present disclosure.
Figure 6 is a flow diagram illustrating a routine for verifying a consumer transaction in accordance with embodiments of the present disclosure.
Figure 7 is a flow diagram illustrating a routine for detecting a fraudulent transaction in accordance with embodiments of the present disclosure.
Figure 8 is a flow diagram illustrating a routine for detecting a fraudulent transaction in accordance with another embodiment of the present disclosure.

### DETAILED DESCRIPTION

The present disclosure describes various embodiments of systems and methods for exchanging various types of prepaid cards (e.g., gift cards), gift card facsimiles, and similar financial instruments (herein referred to as "gift cards" unless indicated otherwise). Such methods and systems provide a way for consumers to monetize their unused or unwanted gift cards. An exchange kiosk (herein referred to as a "kiosk" unless indicated otherwise) configured in accordance with one or more embodiments of the present disclosure can receive a gift card and/or gift card identifier from a consumer wishing to exchange the gift card, verify the gift card's activation status and value, and provide exchange options to a consumer. The options can include, for example, exchanging the gift card for a cash voucher, cash, another gift card of, e.g., a different brand or a same brand and/or a different retailer or same retailer, and/or other types of remuneration or cash equivalent, such as cryptographic currencies, credit, etc. After receiving the gift card from the consumer and dispensing the desired output in exchange for the card, the kiosk can update a gift card database to reflect the exchange and resell the gift card or the gift card value to another consumer via, e.g., an online or electronic marketplace (e.g., a website) or other marketplace.

As described in greater detail below, in various embodiments, when the kiosk receives a first gift card for exchange from a consumer, the kiosk and/or a kiosk server (herein referred to as an "exchange server" unless indicated otherwise) or kiosk operator (herein referred to as a "service provider"), uses the first gift card to purchase a new gift card (i.e., a second gift card). This process removes the value from the first gift card and thereby prevents the consumer from using the card number from the first card to make fraudulent purchases after the consumer has already received value for the first gift card from the kiosk. The exchange server (or service provider) can then sell the new card to the marketplace or otherwise monetize the new card to receive remuneration for the exchange.

In some embodiments, the methods and systems described herein can enable a service provider to provide the gift card exchange service without incurring financial losses due to fraud. Such fraud can result from, e.g., "double dipping," which can occur when a card owner uses the card's identification number to receive value for a single card more than once. For example, a consumer may wish to exchange a $100 financial instrument (e.g., a first gift card for use at a first retailer) at a kiosk for a cash voucher worth $90 or for a second gift card worth $90 for use at a second retailer. The consumer copies the first gift card's identification number and submits the first gift card to the kiosk. The kiosk verifies that the card is active and has a $100 balance. After successful verification and receipt of the first gift card by the kiosk, the consumer receives, e.g., a cash voucher worth $90. However, before the service provider can resell or otherwise monetize the first gift card, the unscrupulous consumer uses the first gift card's identification number to purchase (e.g., via the Internet) merchandise up to the $100 value of the first card. With the value exhausted, the service provider is unable to monetize or otherwise receive fair value for the first gift card.

In some embodiments, the described technology prevents such double-dipping by redeeming ("draining") value from a gift card after receiving it from a consumer to prevent its further redemption, and then issuing the exchange value to the consumer in the form of, e.g., a cash voucher, cash, another gift card of, e.g., a different brand, and/or other types of cash equivalent, such as cryptographic currencies, credit, etc. Methods of draining gift card value can include, for example, purchasing a new gift card with the value from the exchanged gift card. Embodiments of the systems and methods described herein can prevent fraudulent double dipping in gift card redemption and can remove risk of financial loss for a gift card exchange service provider.

As indicated above, the term "gift card" can generally refer to a "financial instrument" that may resemble a credit card, a card facsimile, a voucher, etc., or an electronic equivalent of these things, and has a monetary value (i.e., a face value or balance value). A gift card typically includes a gift card identifier (e.g., an alphanumeric code) that is cross-linked to the gift card's balance. Gift cards can include barcodes, magnetic stripes, processors (e.g., smart chips), optical media, and/or other media for recording gift card identifiers, codes, values, and/or other suitable information. As used herein, the term "gift card" can also encompass virtual gift cards that can be delivered via email, text messages, or mobile phone applications (e.g., iPhone applications) and displayed using a smart phone, tablet, and/or other suitable devices. Gift cards may be open loop or closed loop cards. Banks or credit card companies can issue open loop cards that can be redeemed at different commercial establishments. Conversely, restaurants, stores, and other retail establishments generally issue closed loop cards that are valid only for use at the retail establishment or its retail partners. Accordingly, although the term "gift card" may be used herein for ease of reference, the term will be understood to include other financial instruments unless the context dictates otherwise.

In various embodiments, a gift card that a consumer wishes to exchange is submitted to a kiosk and validated and verified before a new instrument (e.g., a new card, cash, cash voucher, etc.) is issued. For example, the gift card's identification number (i.e., its "identifier") is compared to a list and/or database of known active gift card identification numbers and balances collected or otherwise obtained from the gift cards' issuers (e.g., retailers) or instrument vendors/aggregators. The known "active" gift card identification numbers and balances can be retrieved, for example, from a local and/or remote database, text file, or webpage (e.g., "scrapped" from HTML) and stored on recordable media that resides at or is accessible to the kiosk and/or server. If the gift card's identifier is not active, the gift card is not valid for redemption. Determining whether to make an offer for the gift card is, in some embodiments, based on verification that the gift card has redeemable value. For example, a gift card can be active, as described above, but not have any redeemable value or have a redeemable value less than the card's face value. If verification fails, the exchange server does not make an offer to purchase the gift card from the consumer. In another example, an offer is not made if the value on the gift card is verified but the status of the gift card is not active. Changing a gift card's status from "active" to "inactive" can be useful when the gift card's face value is previously used, or when a gift card is lost or stolen.

In some embodiments, the value in cash, a cash voucher, or a new instrument (e.g., a new gift card) that the consumer receives in exchange for a gift card submitted to the kiosk is based on an offer accepted by the consumer. For example, in some embodiments, the kiosk, via the exchange server, can offer a buy-back value that is less than the face value of the gift card. When the consumer accepts the offer, the consumer receives the buy-back value in the form of cash, a cash voucher, or a new instrument.

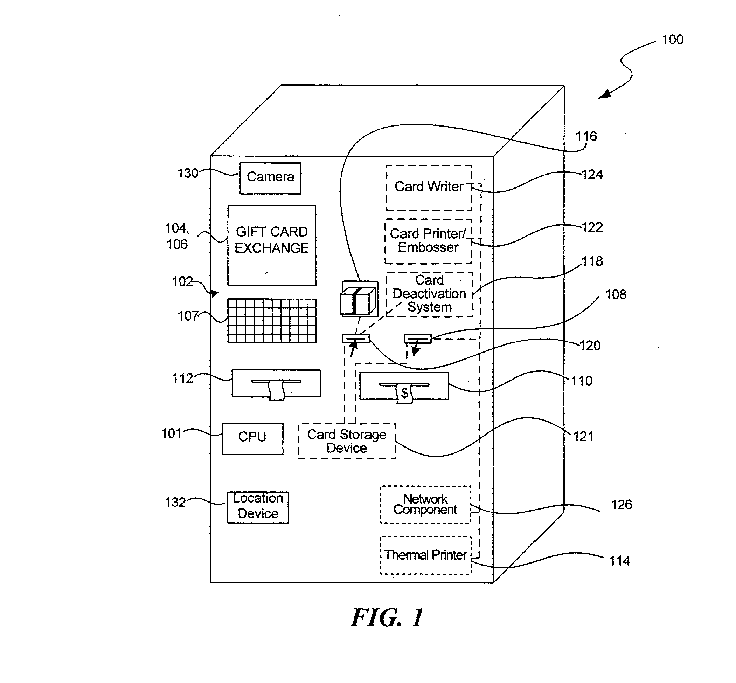

Certain details are set forth in the following description and in Figures 1-8 to provide a thorough understanding of various embodiments of the present disclosure. Other well-known structures and systems often associated with gift cards, gift card payment systems, consumer-operated kiosks, gift card exchange devices/systems/servers and related commerce systems have not been shown or described in detail below to avoid unnecessarily obscuring the descriptions of the various embodiments of the present disclosure. Additionally, a person of ordinary skill in the relevant art will understand that the present disclosure may have additional embodiments that may be practiced without several of the details described below. In other instances, those of ordinary skill in the relevant art will appreciate that the methods and systems described can include additional details without departing from the spirit or scope of the disclosed embodiments.

Many of the details, dimensions, functions and other features shown and described in conjunction with the Figures are merely illustrative of particular embodiments of the present disclosure. Accordingly, other embodiments can have other details, dimensions, functions, and features without departing from the spirit or scope of the present disclosure. In addition, those of ordinary skill in the art will appreciate that further embodiments of the present disclosure can be practiced without several of the details described below.

Figure 1 is a partially schematic isometric view of a kiosk 100 configured in accordance with an embodiment of the present disclosure. The kiosk 100 includes one or more central processing units ("CPUs") 101 that carry out instructions (i.e., software and/or hardware instructions) by performing arithmetical, logical, and input/output operations, such as, e.g., various gift card exchange operations, as described herein. The kiosk 100 includes a consumer interface 102 and one or more output devices. The consumer interface 102 can include a display screen 104, a camera 130, and one or more input devices, such as a card input slot 120. Additionally, an input device can include a keyboard or keypad 107, a bar code reader, an encrypted PIN pad, a voice command device, a cursor control device, a mouse, and/or other suitable input devices that enable or facilitate entering information. In the illustrated embodiment, the consumer interface 102 includes a touch screen 106 that is configured to both display information and receive consumer inputs. The camera 130 is configured to capture an image of one or more consumers, which can be used by the kiosk 100 for verifying the identity of the consumer and/or for security purposes (e.g., capturing an image of a consumer attempting fraud). Location device 132 is a GPS or other location detection device that is configured to determine the kiosk's location (e.g., using latitude and longitude coordinates). A network component 126, such as a network interface card, is configured to send and receive data (e.g., offers from the exchange server, data from a financial instrument, the consumer interface 102, or other data) across a network (e.g., a LAN, a WAN, or the Internet) to the exchange server, financial entity (e.g., a bank), card issuers, and/or other kiosks.

In some embodiments, the kiosk 100 can, for example, retain (e.g., at a card storage device 121) a consumer's gift card or hold a supply of blank gift cards to accommodate new gift card sales. The blank gift cards can include magnetic stripes that can have various types of information (e.g., card identifiers, account information, store numbers, etc.) written to them with a card writer 124 when the gift card is purchased. In other embodiments, the magnetic stripes can include pre-encoded identification codes that the kiosk 100 can read from the gift cards and associate with a remote account and a corresponding value before the gift cards are dispensed from the kiosk 100. The kiosk 100 can also include a card printer 122 (e.g., a two-sided printer) configured to print information and graphics (e.g., the name of a retail establishment, customized text, access numbers, legal information, bar codes, etc.) on gift cards, and/or an embosser that can emboss information (e.g., account numbers, etc.) on new gift cards. Once the appropriate information has been added to the new gift card, it can be dispensed from the kiosk 100 via a card dispenser 108.

As shown in the illustrated embodiment, the kiosk 100 can include other output devices, such as a currency dispenser 110 and a voucher and/or receipt dispenser 112 connected to a printer 114 (e.g., a thermal printer) configured to print redeemable cash vouchers and/or receipts during and/or after transactions. The voucher dispenser 112 can also be configured to dispense vouchers with various card information (e.g., identification information, bar codes, card numbers, etc.) and/or card values printed thereon (e.g., rather than dispensing new gift cards). In one or more embodiments, the kiosk 100 can include other suitable output devices that enable or facilitate dispensing items related to exchanging gift cards and/or other prepaid instruments.

The kiosk 100 can further include a card reader 116 (e.g., a card swipe) for reading magnetic stripes, microchips, optical media, and/or other types of storage media on gift cards, credit cards, debit cards, and/or other types of financial instruments submitted by consumers. In some embodiments, the card reader 116 and card input slot 120 can be incorporated into a single device. In other embodiments, the card reader 116 can be operatively coupled to the card input slot 120.

The display screen 104 can include one or more devices that display options related to exchanging gift cards and/or reselling previously exchanged gift cards. For example, the display screen 104 can include a screen, a monitor, a touch screen, a digital readout, and other suitable devices. The options can include, for example, (1) exchanging one or more gift cards for cash or a redeemable cash voucher, (2) exchanging a first gift card for a second gift card, (3) rejecting an exchange, (4) buying a gift card, and (5) a combination of the above-listed options, and/or other suitable options.

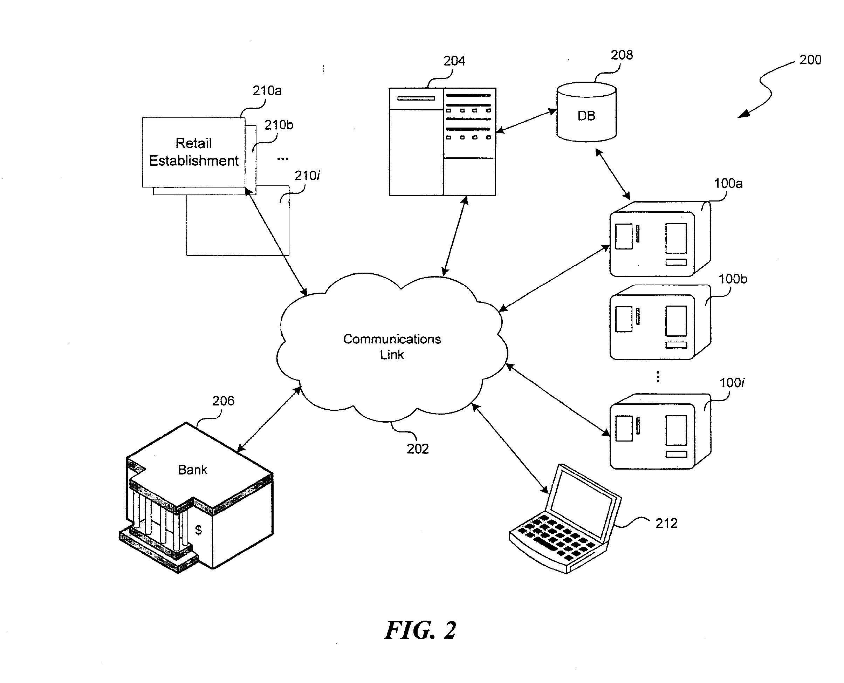

In various embodiments, the display screen 104 can display information and/or images related to various gift cards for exchange or sale in, e.g., a virtual gift card inventory ("inventory"). The inventory can be stored in a remote database connected to the kiosk 100 via a communications link (described in detail in Figure 2). Alternatively or additionally, the inventory can be stored locally on a hard drive or another storage device within the kiosk 100. The inventory can include gift card information related to gift cards previously exchanged with the kiosk 100, with another kiosk connected in a kiosk network, and/or data from other gift cards. For example, the inventory can include gift card identifiers associated with card balances, store names, card activation statuses, etc. Consumers can browse the inventory with the consumer interface 102 using parameters such as store name, price, face value, discount, and/or other suitable browsing parameters. In other embodiments, the information and/or images related to various gift cards for sale in the inventory can be displayed on a remote device (e.g., a remote personal computer, mobile phone, PDA, tablet, etc.) connected to the database.

In one embodiment, the kiosk 100 can be used by a consumer to exchange a gift card for an offered buy-back price paid in the form of cash, a redeemable cash voucher, electronic currency, or a new gift card. The buy-back price is the value the kiosk 100 will pay in exchange for the gift card. The buy-back price can be a fixed rate (e.g., 80% of the gift card's face value) or can vary according to an algorithm associated with one or more factors. Factors can include, for example, anticipated demand for a particular type of gift card from a certain retail establishment, the face value of the gift card, the expiration date, the projected resale value, and/or other suitable factors. Additionally, in one embodiment, the buy-back price and a resale value can be correlated so that the buy-back price is less than the resale price. For example, a gift card having a face value of $100 can have a buy-back price of $80 and a resale value of $85. This arbitrage feature can simultaneously accommodate consumers who wish to monetize their unwanted gift cards and other consumers who want to buy gift cards at a discount, which allows the service provider to realize a profit for providing the service.

In some embodiments, the methods and systems disclosed herein use the gift card identifier and its value (e.g., its face value or remaining balance) to perform the exchange process. For example, a consumer can use the kiosk 100 to exchange a first gift card having a value of $100 and a first identifier (e.g., "XYZ"). The $100 value is verified, via a database and/or list, at the exchange server based on the first identifier. The kiosk 100 then presents a buy-back price (e.g., $80) to the consumer, and the consumer accepts the buy-back price in exchange for the first gift card. The kiosk 100 or an associated system then removes (i.e., drains) the $100 value from the first gift card, and the value is used to purchase a second gift card (e.g., from the retail establishment associated with the first gift card) having a $100 face value and a second identifier (e.g., "DEF"). A third instrument (e.g., a cash voucher, new card, etc.) having a value of $80 is then issued to the consumer in exchange for the first gift card. Alternatively or additionally, the kiosk 100 can issue $80 in cash and/or a cash equivalent in exchange for the first gift card. In various embodiments, the second gift card is then sold to return value to the exchange provider, for example. The above-mentioned technique is an example of exchanging financial instruments while reducing misappropriation of value, based on managing value associated with gift card identifiers.

A gift card identifier can be added to new cards dispensed from the kiosk 100 in a number of different ways. For example, in one embodiment the card writer 124 can write the identifier to a magnetic stripe on the new card. In other embodiments, the card printer 122 can print the identifier on the new card as a bar code. The card printer 122 can also print other information and graphics (e.g., store logo, seasonal designs, etc.) on the new card, and/or an embosser can emboss information (e.g., card number, expiration date, etc.) on the new card. In further embodiments, the kiosk 100 can store blank cards having smart chips, and the kiosk 100 can be configured to program the smart chip with the value associated with the gift card identifier (e.g., in the example above, $80).

In further aspects of the illustrated embodiment, the kiosk 100 can include a card deactivation system 118 operatively coupled to the card input slot 120 to prevent gift cards exchanged by the kiosk 100 from improperly or fraudulently reentering the stream of commerce. The card deactivation system 118 can include one or more devices that physically deactivate gift cards (e.g., a card demagnetizer, shredder, etc.) and/or change the status of gift cards, e.g., from "active" to "void" or "inactive" or "deactivated" in a database (described below in Figure 2). For example, before dispensing an output (e.g., cash, a redeemable cash voucher, a new gift card, etc.), the kiosk 100 can direct a consumer to insert his or her gift card into the card input slot 120, and the card deactivation system 118 can deactivate (e.g., change status, demagnetize, or shred) the gift card before a new card is issued and vended.

Figure 2 illustrates a suitable system and/or network environment 200 for implementing various aspects of the gift card exchange methods and systems described herein. In the illustrated embodiment, a plurality of the kiosks 100 (identified individually as a first kiosk 100a, a second kiosk 100b, a next kiosk 100i, etc.) can be operatively connected to an exchange server 204 via the Internet, a dedicated network, and/or other communications link 202. The exchange server 204 can perform many or all of the functions for exchanging gift cards: performing arbitrage techniques; communicating with retailers; verifying a gift card's status and value; determining offers; receiving, routing, and storing application programs; generating and receiving electronic messages; and performing various other operations associated with features of the network environment 200.

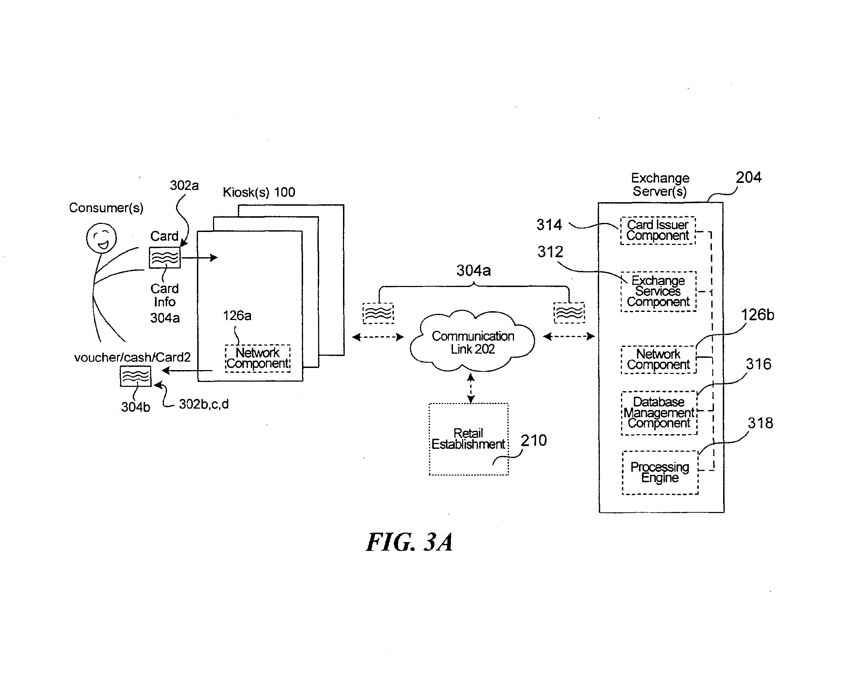

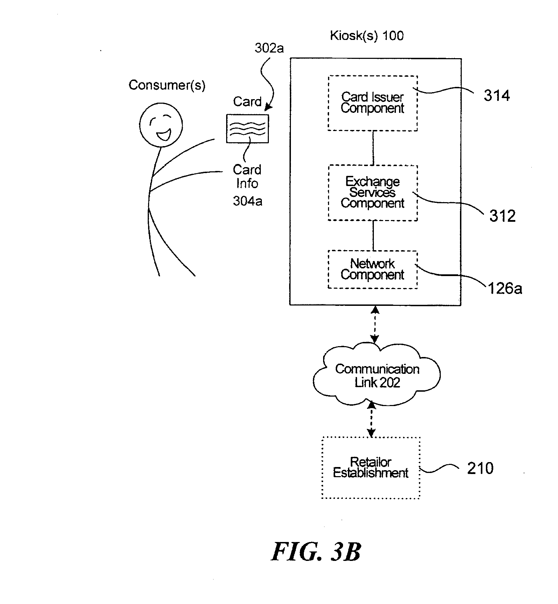

Figures 3A and 3B illustrate suitable network environments for implementing various gift card exchange functionality that is divided among multiple entities in accordance with embodiments of the present disclosure. Referring to Figures 2, 3A, and 3B together, the exchange server 204 and/or the kiosks 100 can include a processing engine 318, a card issuer component 314, an exchange services component 312, network components 126a-b, and a database management component 316. The processing engine 318 performs basic processing and operating system level tasks. The exchange services component 312 facilitates gift card exchange by, for example, receiving identification information from a gift card, changing the status associated with a gift card, verifying the value of a gift card, redeeming ("draining") value from a gift card by using its value to purchase a new card, issuing a cash voucher, cash and/or a new gift card from the kiosk, etc. The exchange services component 312 communicates, via the network component 126, data in the form of messages for purchasing, verifying, validating, and making offers for gift cards. The card issuer component 314 interfaces with retail establishments 210 (or other card issuers) via the issuers' server (not shown) to purchase new gift cards based on the redeemed value of one or more gift cards received at the kiosk 100. The card issuer component 314 can also interface with a vendor/aggregator (e.g., a server that operates as a trusted gift card exchange marketplace that collects gift card information) to verify and validate gift cards received at the kiosk 100. The card issuer component 314 can be customized for a particular retailer/vendor/aggregator, or configured to operate with different retailers/vendors/aggregators. The card issuer component 314 can gather retailer/vendor/aggregator gift card information (e.g., card identifiers, balances, status information, verification information, etc.) from a list (e.g., webpage, database, electronic file, etc.) of gift cards that is maintained at or is accessible to the exchange server 204.

In some embodiments, the card issuer component 314 can purchase one or more gift cards having, for example, a face value substantially equal to the a value of a particular gift card exchanged by a consumer. For example, if a consumer agrees to exchange a $100 gift card from Macy's^{®} for an $80 cash voucher, the card issuer component 314 can use the $100 from the Macy's^{®} gift card to purchase a new $100 gift card from Macy's^{®}. The kiosk 100 can then dispense the $80 cash voucher to the consumer. The card issuer component 314 can send the new card's information to the exchange services component 312, which can communicate with a trusted gift card exchange marketplace for selling the new Macy's^{®} $100 gift card via a website, a third-party entity's server, or another retailer.

The system illustrated in Figure 2 can connect individual kiosks 100 to the exchange server 204 to share information. For example, the card reader 116 on the kiosk 100a can read a first gift card identifier from a first gift card submitted by a consumer for exchange, or the consumer can input the first gift card identifier via the consumer interface 102. Through the communications link 202 or a direct connection (e.g., fiber channel), the exchange server 204 and/or the kiosk 100a can query a database 208 to determine the first gift card's activation status and value. In other embodiments, one or more retail establishments 210 (referred to individually as retail establishments 210a, 210b, and 210*i*), a bank 206, or other card issuer can provide the first gift card's activation status and value to the exchange server 204 (and/or the kiosks 100) via the communications link 202. If the first gift card is inactive or fraudulent, the kiosk 100a can reject the first gift card (e.g., dispense the first gift card, deactivate the first gift card, retain the card, etc.). If the first gift card is active, the kiosk 100a via the exchange server 204 can provide a buy-back offer to the consumer at a price associated with the value of the first gift card. For example, the kiosk 100a can display exchange options to the consumer on the display screen 104 and receive a selection from the consumer via the consumer interface 102 (Figure 1). If the selection corresponds to accepting the buy-back offer (in the form of, e.g., a cash voucher), the kiosk 100a dispenses the buy-back price to the consumer, and the data from the first gift card (e.g., gift card identifier, value, etc.) can be added to a virtual gift card inventory stored in the database 208. The exchange server 204 and/or kiosk 100a can also deactivate the first gift card (via the card deactivation system 118) in the database 208 and/or notify the database 208 that the kiosk 100a has possession of the first gift card.

In some embodiments, the exchange server 204 can resell all or a portion of the value on the first gift card to a retailer establishment 210 and/or electronic marketplace. The communications link 202 can connect the kiosks 100 and exchange servers 204 to a remote personal device 212 (e.g., a computer, tablet, mobile phone, etc.) where consumers can browse the virtual gift card inventory stored on the database 208 (e.g., via a website, a smart phone or tablet application, etc.) and purchase gift cards therefrom.

In one embodiment, some or all of the functionality and components (e.g., the exchange services component 312 and/or card issuer component 314) can reside in one or more of the kiosks 100. *See, e.g.,* Figure 3B. Consolidating component functionality allows certain efficiencies, such as decreasing the amount of network equipment required for, e.g., draining and issuing gift cards, validating and verifying information, purchasing new gift cards and selling gift cards, etc. Alternatively, the components can be distributed among one or more networked entities (e.g., servers).

Figure 3A is an illustration of an embodiment of the system described in Figure 2 in which the card exchange functionality is largely divided between two entities: the kiosk 100 and the exchange server 204. A gift card 302a has card information 304a, including a card identifier and a value (i.e., the balance) for making purchases from a retail establishment 210 (for example, the gift card 302a can be a Macy's^{®} gift card for $100 having an identifier of "XYZ"). A consumer wishing to exchange the gift card 302a inputs the gift card 302a and/or its information 304a into the kiosk 100. The kiosk 100 sends the information 304a, via the network component 126a and the communications link 202, through the network component 126b to the exchange services component 312 of the exchange server 204. The exchange services component 312 receives the card information 304a and verifies and validates the card balance and status from a known list of gift card identifiers and balance pairs (e.g., "XYZ:$100,active") stored in the database 208 or other list or database (not shown).

If the card value is valid and verified, the exchange services component 312 determines and sends an offer price (e.g., $80) to the kiosk 100 for purchasing the gift card 302a from the consumer at the offer price. If the offer is accepted by the consumer, the exchange services component 312 drains the value (i.e., the balance) from the gift card 302a to prevent the gift card identifier from being used by the consumer after the exchange, and the kiosk 100 issues a cash voucher 302b (or cash 302c, a new gift card 302d, or other cash equivalent, etc.) to the consumer for the offer price (e.g., $80). In some embodiments, the exchange services component 312 can drain the value from the gift card 302a by engaging the card issuer component 314 to purchase one or more new gift cards from the retail establishment 210 (e.g., Macy's^{®}) for up to the value (e.g., $100) of the original gift card 302a. Having purchased the new gift card or cards, the card issuer component 314 can advertise and/or sell the new gift cards at or to a marketplace (e.g., a website, software application, electronic display and/or billboard, tablet device, smart phone, smart watch, smart glasses, a card aggregation service, or other retail establishment 210*i*). Selling the new gift card or cards allows the exchange provider to receive payment for providing the exchange service. Some or all of the features of the exchange services component 312 and the card issuer component 314 can reside on a plurality of servers. For example, the verification, validation, and offer capabilities of the exchange services component 312 can reside on a second server (not shown) while the remaining features reside on the exchange server 204. In another embodiment and as illustrated in Fig. 3B, one or more of the exchange services component 312 and the card issuer component 314 can reside on one or more kiosks 100.

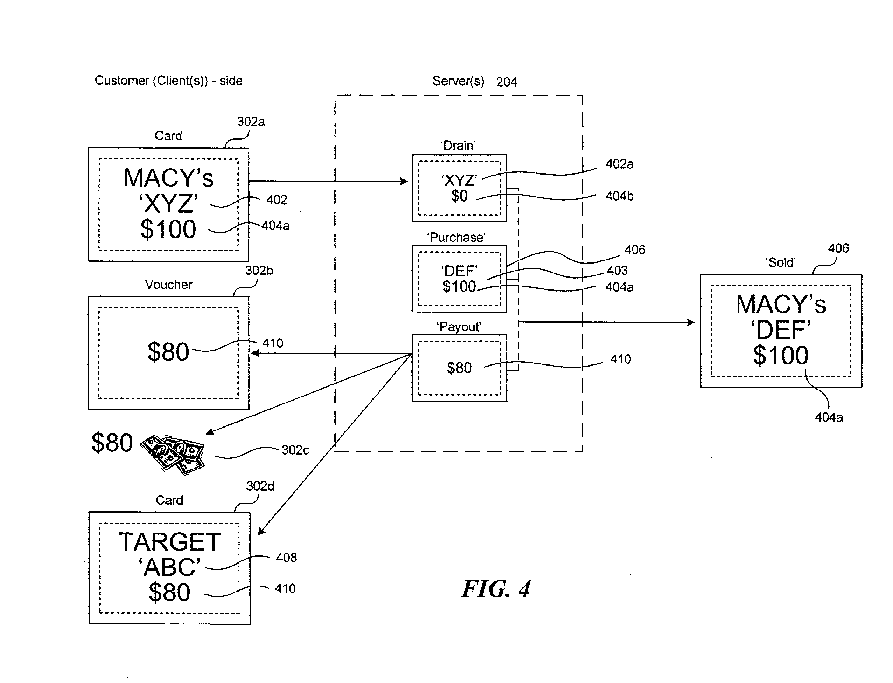

Figure 4 is a schematic diagram illustrating a system and method for draining value (e.g., a balance) from a first gift card 302a (e.g., a first Macy's^{®} gift card) and dispensing a cash voucher 302b, cash 302c, a second gift card 302d, and/or other form of value to a consumer in exchange for the first gift card 302a. The exchange server 204 receives, via the kiosk 100, identification information 402a (e.g., "XYZ") and a value 404a (e.g., a balance of $100) associated with the first gift card 302a. The value is verified, and an offer is made to the gift card owner via the kiosk 100 to purchase the first gift card 302a at a buy-back price 410 (e.g., $80). If the offer is accepted, the value 404a (e.g., the $100 balance) is drained from the first gift card 302a (i.e., the first gift card 302a now has a value 404b of $0). The value 404a drained from the first gift card 302a can then be used to purchase a new gift card 406 (e.g., a second Macy's^{®} gift card having new identification information 403 (e.g., "DEF") and a face value 404a of $100) that can be sold to an electronic marketplace (for, e.g., $100). The cash voucher 302b, the cash 302c, the new card 302d (e.g., a new Target_{®} gift card having new identification information 408 (e.g., "ABC")), electronic currency (e.g., bitcoins), and/or another form of value can then be paid to the consumer or to the consumer's financial repository (e.g., an e-wallet, digital wallet, bank 206, etc.) via the kiosk 100 in exchange for the first gift card 302a. In some embodiments, the value 404a (i.e., the $100 balance) drained from the first gift card 302a can aggregated with value drained from other gift cards (not shown). The aggregated value can be used to purchase one or more new gift cards 406 of different denominations. For example, value drained from three $25 gift cards (not shown) can be aggregated and sold at a marketplace as a new, single $75 gift card (not shown).

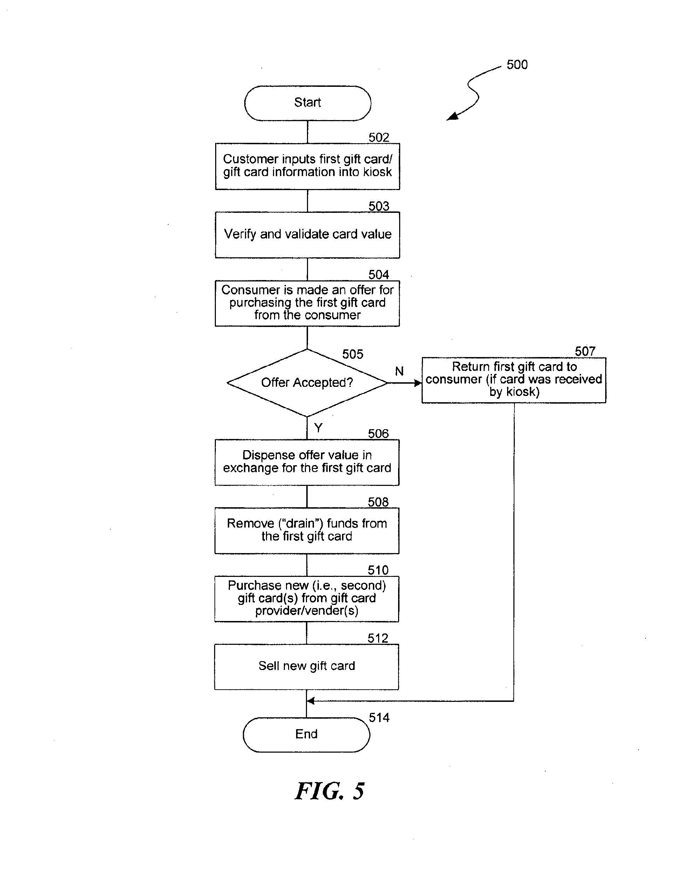

Figure 5 is a flow diagram of a routine 500 for exchanging a first gift card 302a for a cash voucher 302b, cash 302c, one or more new gift cards 302d, and/or other cash equivalents, etc. at kiosk 100. At block 502, a consumer wishing to exchange a first gift card (e.g., the first gift card 302a) provides the first gift card 302a (or the identification information 402) to the kiosk 100 (e.g., by swiping the first gift card 302a through a card reader 116 or inserting the first gift card 302a into a card input slot 120). At block 503, the first gift card 302a is validated and verified to have value (i.e., a balance equal to, e.g., its face value). At block 504, the exchange server 204 determines a buy-back value for purchasing the first gift card 302a from the consumer. This can be done by, e.g., a market analysis, an algorithm, a predetermined buy-back percentage based the card value, supply and demand, and/or other techniques. A buy-back offer is presented to the consumer via the kiosk 100. At decision block 505, the kiosk determines if the consumer has accepted the offer. At block 507, if the offer is not excepted the transaction is canceled and the first gift card 302a is returned to the consumer (if it was retained by the kiosk 100). If at block 505 the offer is accepted then at block 506, the offer value is issued to the consumer in the form of one or more of the redeemable cash voucher 302b, the cash 302c, the physical gift card 302d, a virtual gift card, electronic currency, a receipt, an email, an SMS message, a social media entry, and/or other physical or electronic instrument of value. For example, a consumer can select via the kiosk 100 that the offer value is to be paid as a cash voucher 302b or one or more new gift cards 302d. If one or more gift cards are selected, for example, the kiosk 100 can print and/or write information (i.e., gift card identifiers) associated with the one or more gift cards by using a printer 114 or card writer 124. The kiosk 100 can then dispense the one or more new gift cards at a card dispenser, such as the card dispenser 108 described above, and activate the one or more gift cards via a communications link connecting the kiosk 100 to a database (e.g., database 208), an exchange server 204, or a system of the retail establishment 210. As mentioned above, alternatively or in addition to selecting the one or more new gift cards, a cash voucher 302b, for example, can be selected and dispensed in exchange for the first gift card 302a.

At block 508, the exchange server 204 drains the value from the first gift card 302a. Draining value can, for example, entail making an indication in a list and/or database, e.g., database 208, that the first gift card's identifier is no longer associated with the balance, etc. At block 510, one or more new gift cards 406 are purchased with the value drained from the first gift card 302a. A new gift card 406 can be purchased from the original retail establishment 210 of the first gift card 302a and resold, at block 512, directly at an electronic marketplace; to another consumer; a card issuer, vendor, card aggregation service; or other entity associated with a marketplace (e.g., an electronic marketplace). In one or more embodiments, the techniques described for block 508 and block 510 can be performed in a single step. The flow diagram routine 500 ends at block 514. In one or more embodiments, the position of the blocks 502-512 within the routine 500 is interchangeable with the position of another block within the routine 500. For example, steps associated with block 508 can occur before steps associated with block 506.

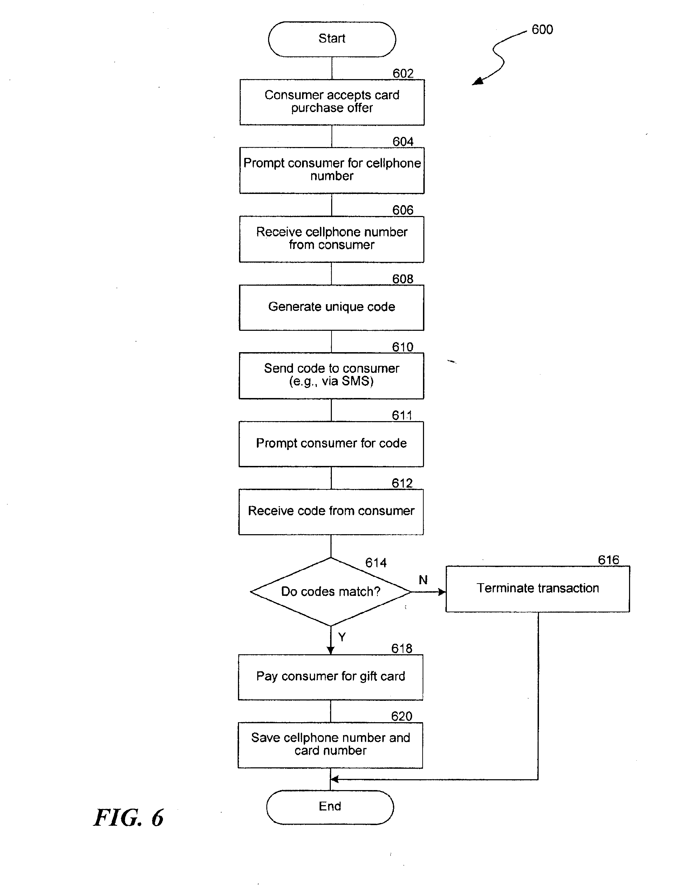

In various embodiments, the system and associated methods described herein can detect and alert service providers (and other entities) to potentially fraudulent activities. For example, the exchange server 204 can use various delivery techniques, such as short message service (SMS), email, the Internet, and/or an intranet to send information to an exchange provider, retail establishment 210, a bank 206 and/or the consumer to detect, prevent and/or inform of illicit activities (e.g., double dipping). For example, Figure 6 is a flow diagram illustrating a routine 600 for verifying the identity of a consumer and associating the consumer with a gift card identifier and/or a gift card exchange transaction, based on the consumer's cellphone number. In one or more other embodiments, various other or additional consumer identifiers can be used to verify the identity of the consumer, such as a driver's license, credit card, zip code, email address, and/or social security number, etc. Various portions of the routine 600 can be performed by the kiosk 100 and/or the exchange server 204. The routine 600 can begin after the kiosk 100 presents an offer to purchase a gift card from the consumer, as discussed above (e.g., see block 504 of routine 500). At step 602, the consumer accepts the offer to purchase the gift card by making an indication at, for example, the keyboard or keypad 107 or the touchscreen 106. At step 604, the kiosk 100 prompts the consumer to enter their cellphone number (or other mobile device number) via, e.g., the keyboard or keypad 107 or the touchscreen 106. At step 606, the consumer enters their cellphone number at the kiosk 100. Then, at step 608, the kiosk 100 (and/or the exchange server 204) generates a code (e.g., a random number "12345," a code that is unique to an exchange transaction (e.g., unique to a consumer's current exchange transaction), and/or other value) and associates the code with the consumer's cellphone number. The routine sends a message (e.g., an SMS message or a voice message) containing the code ("12345") and instructions to, for example, the consumer's cellphone at step 610, and then the consumer's cellphone receives the message for display to the consumer. The instructions direct the consumer to enter the code (e.g., "12345") at the kiosk 100 via, e.g., the keyboard or keypad 107 or the touchscreen 106. At step 611, the consumer is prompted to enter the code and, at step 612, the consumer inputs the code into the kiosk 100. Next, at decision step 614, the kiosk 100 (and/or the exchange server 204) determines whether the code entered by the consumer matches the code (e.g., "12345") generated by the kiosk 100 (or the exchange server 204). If the code entered by the consumer does not match the code (e.g., "12345"), the consumer is not validated, and at step 616, the routine 600 terminates the exchange without dispensing the purchase price to the consumer. Conversely, if the codes do match then at step 618 the consumer is verified and a cash voucher (or other value) is dispensed to the consumer in exchange for the gift card.

At step 620, the routine maintains a list and/or database (e.g., database 208) of verified consumer cellphone numbers along with the respective gift card identifiers associated with consumers' transactions. For example, when a consumer exchanges a gift card having a gift card identifier "ABC," the routine associates (e.g., in a list or a database) the consumer's cellphone number (e.g., 555.555.5555) with the gift card identifier: "555.555.5555 - ABC." The list (or the database) can be referenced by the kiosk 100 (or the exchange server 204) and/or other entities and/or authorities for use in determining whether someone is subsequently attempting to use the same gift card ("ABC") in another transaction (i.e., double dipping) and, if so, identify the responsible parties, as further described below.

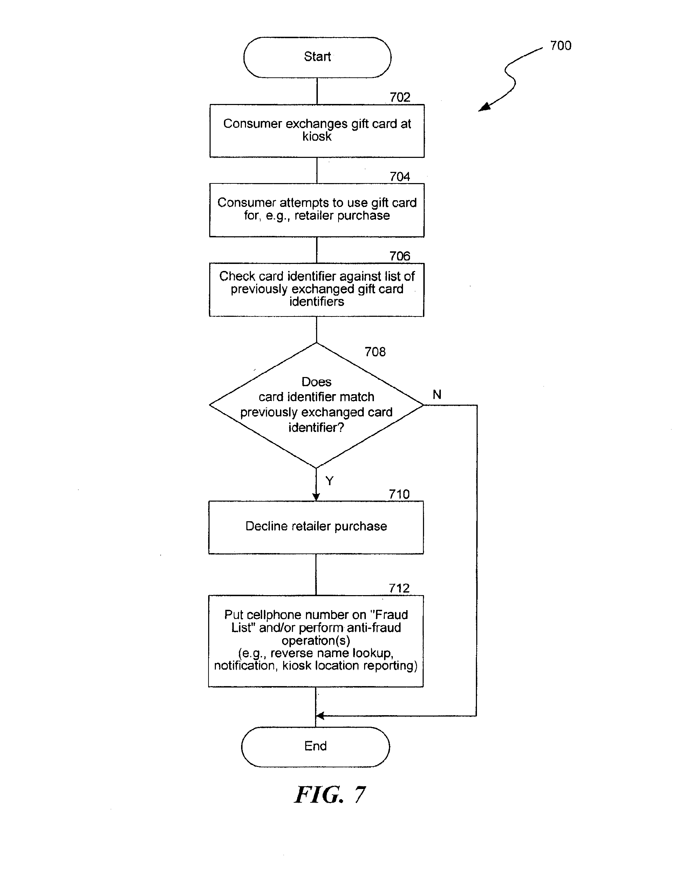

Figure 7 is a flow diagram illustrating a routine 700 that is distinct from the drain and reissue fraud prevention techniques described above, and is applicable in various embodiments when all of a gift card's value is not drained from the card upon exchange. The routine 700 can be used to detect a fraudulent transaction and identify responsible parties by referring to a list or database (e.g., the database 208) of consumer cellphone numbers that are associated with previously exchanged gift card identifiers. In other embodiments, various other or additional consumer identifiers can be used to associate consumers with the gift cards that they have exchanged, such as a driver's license, credit card number, zip code, email address, social security number, etc. At step 702, the consumer exchanges a gift card for, e.g., a cash voucher at the kiosk 100. At step 704, the consumer (or other individual) subsequently attempts to make a purchase from a retailer (e.g., an on-line retailer) using the gift card identifier associated with the exchanged gift card. At step 706, the retailer, the exchange server 204, or other system checks the list of previously exchanged gift cards (or the database) to determine whether the gift card identifier matches any previously exchanged gift card identifiers, which would indicate that the consumer (or someone else) is double dipping. If there is not a match, then the routine 700 ends. If there is a match at decision step 708, the retailer declines the consumer's transaction at step 710. In some embodiments, if there is a match (e.g., the gift card identifier has already been exchanged) then at step 712, the exchange server 204 enters or otherwise associates the consumer's cellphone number with a list (i.e., a "fraud list") of cellphone numbers that are associated with fraudulent activity. The exchange server 204 can also perform various anti-fraud operations based on the consumer's cellphone number. For example, the exchange server 204 can perform a reverse name lookup (i.e., the consumer's name and/or address is determined based on the consumer's cellphone number), and/or notify authorities or the card issuer of the consumer's name, address, cellphone number, and/or the location of the kiosk 100 (e.g., the kiosk 100 can determine its GPS coordinates via location device 132). The server 204 can also notify the consumer (e.g., by sending an SMS and/or voice message) that the provider is aware of the consumer's fraudulent activity and that steps have been taken to remedy or prevent it in the future (e.g., preventing future card exchanges by the kiosk, notifying authorities, etc.)

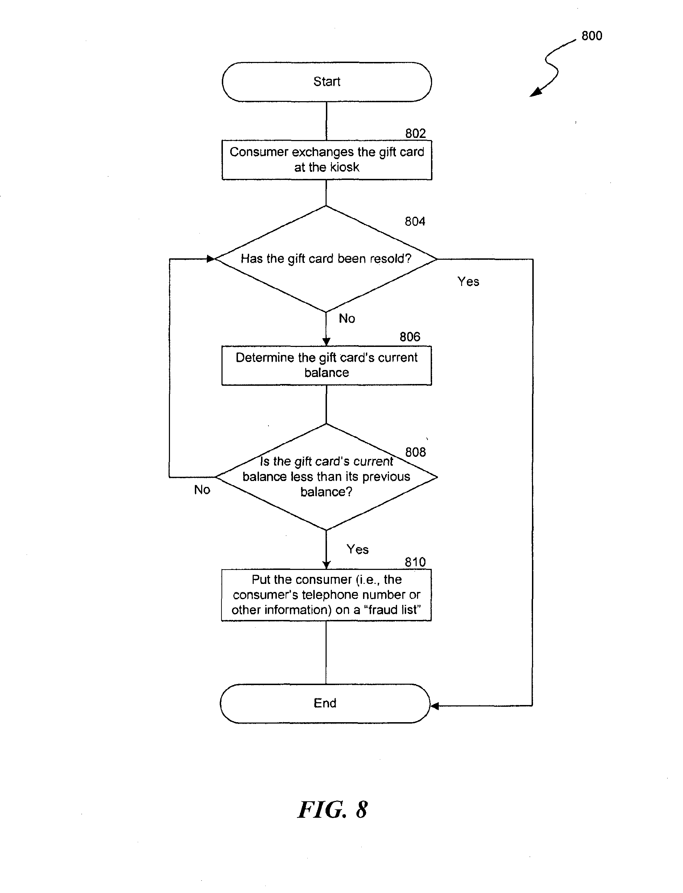

Figure 8 is a flow diagram illustrating a routine 800 that is distinct from the drain and reissue fraud prevention techniques described above, and can be used in various embodiments when all of a gift card's value is not drained after exchange at the kiosk 100. In contrast to the routine 700, the routine 800 is used to detect a fraudulent transaction based on verifying a gift card's balance after the gift card has been exchanged. At step 802, the consumer exchanges a gift card at the kiosk 100 for a cash voucher, cash, another gift card, and/or cash equivalent, etc. At step 804, the exchange server 204 confirms that the gift card is still held by the gift card exchange service provider and has not been resold yet (e.g., at an electronic marketplace). If the gift card has not been resold yet, then the routine proceeds to step 806 to determine the current balance of the gift card. For example, the balance can be checked periodically (e.g., daily) after the card has been exchanged. In one or more embodiments, a gift card's balance is obtained from a list and/or database of known active gift card identification numbers maintained by the gift cards' issuers (e.g., retailers) or instrument vendors/aggregators. At step 808, the gift card's current balance is compared with the gift card's value when the gift card was exchanged at the kiosk 100 (i.e., its previous balance). If the gift card has a current balance that is less than the gift card's previous balance when exchanged, then this is an indication that the gift card identifier was fraudulently used to make a purchase (e.g., an online purchase) after the gift card was deposited and exchanged at the kiosk.

If the current balance of the gift card is less than its previous balance when exchanged (and hence the consumer has double dipped), then at step 810, the consumer (i.e., the consumer's cellphone number or other identifier) is placed on a list (e.g., a "fraud list") so that the consumer cannot make additional gift card exchange transactions with the kiosk. For example, as described above in reference to the routine 600, the consumer's cellphone number was previously acquired by the kiosk 100 when the consumer exchanged the gift card at step 802. If the consumer attempts to make another (i.e., a second) gift card exchange, the consumer must once again input the cellphone number (or other identifier, such as a driver's license or credit card number, etc.) into the kiosk 100 (or a separate kiosk 100 that was not used for the first gift card exchange). If the consumer (i.e., the consumer's cellphone number or other identifier) is on the fraud list, then consumer is prevented from making the second gift card exchange (i.e., the consumer's transaction is terminated). Returning to step 808, if the current gift card balance is not less than its previous balance, then the routine returns to step 804 to determine whether the gift card has been resold by the exchange service provider (e.g., at an electronic marketplace). If the gift card has been resold, then the routine 800 ends. If not, the routine proceeds to step 806 and repeats as set forth above.

In general, the detailed description of embodiments of the described technology is not intended to be exhaustive or to limit the technology to the precise form disclosed above. While specific embodiments of, and examples for, the technology are described above for illustrative purposes, various equivalent modifications are possible within the scope of the described technology, as those skilled in the relevant art will recognize. For example, while processes, blocks, and/or components are presented in a given order, alternative embodiments may perform routines having steps, or employ systems having blocks, in a different order, and some processes or blocks may be deleted, moved, added, subdivided, combined, and/or modified. Each of these processes, blocks, and or components may be implemented in a variety of different ways. Also, while processes, blocks, and or components are at times shown as being performed in series, these processes, blocks, and/or components may instead be performed in parallel, or may be performed at different times.

The teachings of the described technology provided herein can be applied to other systems, not necessarily the system described herein. The elements and acts of the various embodiments described herein can be combined to provide further embodiments.

These and other changes can be made to the described technology in light of the above Detailed Description. While the above description details certain embodiments of the technology and describes the best mode contemplated, no matter how detailed the above appears in text, the described technology can be practiced in many ways. Details of the described technology may vary considerably in its implementation details, while still being encompassed by the technology disclosed herein. As noted above, particular terminology used when describing certain features or aspects of the described technology should not be taken to imply that the terminology is being redefined herein to be restricted to any specific characteristics, features, or aspects of the technology with which that terminology is associated. In general, the terms used in the following claims should not be construed to limit the described technology to the specific embodiments disclosed in the specification, unless the above Detailed Description section explicitly defines such terms. Accordingly, the actual scope of the described technology encompasses not only the disclosed embodiments, but also all equivalent ways of practicing or implementing the described technology.

## Claims

1. A computer-implemented method for operating a consumer operated kiosk, the method comprising:
receiving a first payment instrument identifier from a consumer at the kiosk, wherein the first payment instrument identifier is associated with a first payment instrument;
determining a value associated with the first payment instrument identifier;
determining an offer price for purchasing the first payment instrument from the consumer;
presenting the offer price to the consumer at the kiosk;
receiving, via the kiosk, acceptance of the offer price from the consumer; and
purchasing a second payment instrument with at least a portion of the value associated with the first payment instrument identifier.

2. The computer-implemented method of claim 1, further comprising selling the second payment instrument or a second payment instrument identifier associated with the second payment instrument.

3. The computer-implemented method of claim 1 or 2, further comprising selling the second payment instrument online.

4. The computer-implemented method of any one of claims 1-3, further comprising advertising aspects of the second payment instrument online and selling the second payment instrument online.

5. The computer-implemented method of any one of claims 1-4 wherein after purchasing the second payment instrument, the value associated with the first payment instrument identifier is zero.

6. The computer-implemented method of any one of claims 1-5 wherein the second payment instrument has a second payment instrument identifier that is different than the first payment instrument identifier.

7. The computer-implemented method of any one of claims 1-6 wherein the first payment instrument is a gift card.

8. The computer-implemented method of any one of claims 1-6 wherein the first and second payment instruments are gift cards of a single retailer brand.

9. The computer-implemented method of any one of claims 1-6 wherein the first and second payment instruments are gift cards of different retailer brands.

10. The method of any one of claims 1-9, further comprising:
in response to receiving acceptance of the offer price, prompting, at the kiosk, the consumer to provide contact information wherein the contact information is associated with the consumer;
sending a message to the consumer via the contact information, wherein the message includes at least a portion of a code;
requesting the consumer enter information associated with the code at the kiosk;
in response to requesting the consumer to enter the information associated with the code, receiving information from the consumer;
determining whether the information received from the consumer matches the information requested from the consumer; and
at least partially in response to determining that the information received from the consumer matches the information requested from the consumer:
adding at least the contact information to a list of gift card exchange transactions.

11. The method of claim 10 wherein prompting the consumer to provide contact information includes prompting the consumer to provide a telephone number or an email address, and wherein sending a message to the consumer via the contact information includes sending a message to the telephone number or the email address.

12. The method of claim 10 or 11, further comprising, at least partially in response to determining that the information received from the consumer matches the information requested from the consumer, adding the first payment instrument identifier to the list of gift card exchange transactions and associating the first payment instrument identifier with the contact information in the list.

13. The method of any one of claims 10-12, further comprising in response to determining that the information received from the consumer does not match the information requested from the consumer, preventing a gift card exchange transaction.

14. The method of any one of claims 10-13, further comprising:
determining if the first payment instrument identifier was used to make a purchase from a retailer after the first payment instrument was received at the kiosk from the consumer; and
in response to determining that the first payment instrument identifier was used to make a purchase from a retailer, adding the contact information to a fraud list, wherein contact information on the fraud list is prevented from being used to make future gift card transactions at the kiosk.

15. The method of any one of claims 10-14, further comprising determining if the first payment instrument identifier was used to make a purchase from a retailer after the first payment instrument was received at the kiosk from the consumer by comparing a balance of the first payment instrument after it was purchased to a balance of the first payment instrument before it was received.
